(19) Europäisches Patentamt
European Patent Office
Office européen des brevets

(11) Veröffentlichungsnummer: **0 224 158 B1**

(12) # EUROPÄISCHE PATENTSCHRIFT

(45) Veröffentlichungstag der Patentschrift: **22.12.93**

(51) Int. Cl.[5]: **C08F 8/30**, C08G 59/14, C08G 85/00, C08G 63/91, C08G 18/80

(21) Anmeldenummer: **86115895.4**

(22) Anmeldetag: **15.11.86**

(54) **Härtbare Mischung auf Basis von olefinisch ungesättigten Verbindungen und wasserstoffaktiven Verbindungen.**

(30) Priorität: **21.11.85 DE 3541140**

(43) Veröffentlichungstag der Anmeldung: **03.06.87 Patentblatt 87/23**

(45) Bekanntmachung des Hinweises auf die Patenterteilung: **22.12.93 Patentblatt 93/51**

(84) Benannte Vertragsstaaten: **AT BE CH DE ES FR GB IT LI NL SE**

(56) Entgegenhaltungen:
**EP-A- 0 053 766**
**EP-A- 0 160 824**
**DE-A- 2 631 949**
**DE-B- 2 639 491**

(73) Patentinhaber: **HOECHST AKTIENGESELLSCHAFT**

**D-65926 Frankturt(DE)**

(72) Erfinder: **Brindöpke, Gerhard, Dr.**
**Loreleistrasse 18**
**D-6230 Frankfurt am Main 80(DE)**
Erfinder: **Walz, Gerd, Dr.**
**Pfingstbornstrasse 99**
**D-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Es ist bekannt, ungesättigte Verbindungen, wie Zimtsäureester, mit H-aktiven Verbindungen, z.B. Malonsäureester oder Acetessigester, durch Michael-Addition unter Bildung von substituierten Verbindungen, z.B. substituierten Malonsäureestern, umzusetzen (Krauch-Kunz "Namensreaktionen der organischen Chemie" 5. Auflage 1976, Seite 42).

Ferner ist es bekannt, ein OH-Gruppen enthaltendes Acrylatharz bzw. ein mit $\epsilon$-Caprolacton modifiziertes Acrylatharz im Gemisch mit Polyisocyanaten als Zweikomponentenlack zu verwenden (DE-Patentschriften 3 005 945, 3 027 776 und 3 148 022). Eine weitere Druckschrift beschreibt die Umsetzung von Epoxidgruppen enthaltenden Acrylatcopolymerisaten mit einem teilblockierten Isocyanat und die Verwendung des Reaktionsproduktes als Lackbindemittel (DE-Offenlegungsschrift 3 130 545).

Die bekannten Produkte haben sich zum Teil gut bewährt. Es wurde jedoch schon versucht, umweltfreundlichere Produkte herzustellen, indem man von Systemen ohne freies Isocyanat ausgeht.

So ist in einer anderen Druckschrift ein Oxazolidin enthaltendes Acrylatharz beschrieben, das Wasser oder Luftfeuchtigkeit als Härter nutzt (EP-A-34 720). Dieses System hat den Nachteil, daß die gehärtete Oberfläche einem tieferen Eindringen von Wasser in die unteren Schichten des Überzugs entgegenwirkt und so eine vollständige Härtung durch die ganze Schichtdicke verhindert.

Es ist auch ein ohne Isocyanat reagierendes Zweikomponenten-System bekannt. Dieses besteht aus einem Epoxidgruppen enthaltenden Acrylharz, das mit einem anderen Acrylharz, das tertiäre Aminogruppen enthält, härtbar ist. Bei dem nach diesem Verfahren hergestellten Produkt führt der zu geringe Vernetzungsgrad jedoch zu einer ungenügenden chemischen Beständigkeit, so daß die mit diesem System hergestellten Überzüge nur für ein beschränktes Anwendungsgebiet geeignet sind.

DE-A-2 631 949 beschreibt Bindemittel aus Polyepoxiden, Acrylsäureestern und verkappten Isocyanaten. Diese Bindemittel enthalten Photoinitiatoren und werden durch Strahlen gehärtet. Durch eine thermische Nachbehandlung werden diese Bindemittel auf den Untergrund fixiert.

Im EP-A-0 160 824 werden härtbare Systeme auf der Basis Michael-Donor und Michael-Acceptor beschrieben. Den dort benutzten Michael-Donatoren fehlt jedoch die Carbamid-Gruppe.

Der Erfindung liegt daher die Aufgabe zugrunde, ein Vernetzungsprinzip zu entwickeln, das die vorstehend dargelegten Nachteile nicht aufweist.

Gegenstand der Erfindung ist eine härtbare Mischung enthaltend

A) Verbindungen mit mindestens zwei $R^1R^2C=CR^3$-X-Gruppen (I) und

B) Verbindungen mit Methan-tricarbonsäureamid-Einheiten der Formel

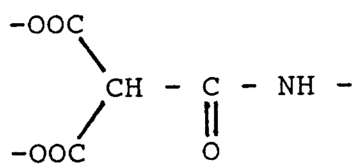

(II)

wobei diese Verbindungen B) mindestens zwei Gruppen mit aktiven H-Atomen des Typs

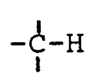

enthalten, und wobei in der Formel (I)

- X -CO- bedeutet,
- $R^1$ Wasserstoff oder ein Kohlenwasserstoff-Rest, vorzugsweise ein Alkylrest, mit 1 bis 10, vorzugsweise mit 1 bis 4 C-Atomen ist,
- $R^2$ Wasserstoff, einen Kohlenwasserstoff-Rest, vorzugsweise einen Alkylrest, mit 1 bis 10, vorzugsweise 1 bis 4 C-Atomen, eine Estergruppe mit dem Rest $R^4$ eines einwertigen Alkohols mit bis zu 12 C-Atomen, -CN, $-NO_2$, eine CO-$NHR^1$- oder eine CO-$R^1$-Gruppe darstellt, und
- $R^3$ dieselbe Bedeutung wie $R^2$ hat und hiermit gleich oder verschieden ist, wobei das Mengenverhältnis von A) zu B) so gewählt wird, daß das Verhältnis der aktiven Doppelbindungen zu den aktiven H-Atomen 2 : 1 bis 1 : 2 beträgt,

sowie 0,01 bis 5 Gew.-%, bezogen auf den Gesamtfeststoffgehalt, eines für die Michael-Reaktion bekannten

Katalysator, wobei diese härtbaren Mischungen frei von Photoinitiatoren sind.

Falls $R^1$ sowie gegebenenfalls auch $R^2$ und $R^3$ einen Kohlenwasserstoffrest darstellen, so kann dieser beispielsweise ein verzweigter oder unverzweigter Alkylrest sein, der gegebenenfalls auch Heteroatome wie O oder NH enthalten kann. Alternativ kann dieser Kohlenwasserstoffrest ein substituierter oder unsubstituierter Cycloalkylrest mit 6 bis 10 C-Atomen oder ein vorzugsweise unsubstituierter aromatischer Rest mit 6 bis 10 C-Atomen, wie Phenyl-, Benzyl- oder Naphthyl- sein.

Die Gruppierung

$$-\overset{|}{\underset{|}{C}}H-$$

in Formel (II) ist von einem Umsetzungsprodukt eines Mono- oder Polyisocyanates mit einem Malonsäurederivat abgeleitet. Dies hat den Vorteil, daß Komponenten eingesetzt werden, die keine toxischen Bestandteile enthalten und die daher ohne besondere Vorsichtsmaßnahmen angewendet werden können.

Obwohl bei der Reaktion von Verbindungen A) mit jeweils zwei Gruppen der Formel (I) mit Verbindungen B) mit zwei Einheiten der Formel (II), auch wenn diese jeweils nur ein acides H-Atom enthalten, aufgrund der beiderseitigen Bifunktionalität zu erwarten ist, daß hierbei ausschließlich eine Kettenverlängerung eintritt, erhält man überraschenderweise gehärtete Produkte. Die wirksamen Gruppen der Verbindungen A) und B) können auch in einem einzigen Molekül enthalten sein, so daß Systeme vorliegen, die durch intermolekulare Vernetzung härtbar und selbstvernetzend sind.

Wenn eine höhere Reaktivität und damit stärkere Vernetzung des Produktes angestrebt wird, kann man mit Vorteil so vorgehen, daß in mindestens einer der Verbindungen A) oder B) drei oder mehr Gruppen des Typs (I) und/oder Einheiten des Typs (II) vorhanden sind.

Die erfindungsgemäß eingesetzten Verbindungen A)enthalten mindestens zwei $R^1R^2C=CR^3$-X-Gruppen, die indirekt miteinander verbunden sind. Als indirekte Verknüpfung kommt hier beispielsweise ein Kohlenwasserstoffrest, vorzugsweise jedoch der Rest eines mehrwertigen Alkohole oder eines mehrwertigen Amine in Frage. Diese indirekte Verknüpfung kann dabei auch ein Teil der Kette eines Oligomeren und/oder Polymeren sein, d.h. die Gruppen (I) können in den Seitenketten der Hauptkette des Oligomeren bzw. Polymeren vorhanden sein oder diese Seitenketten bilden. Falls die Gruppen (I) in einem Oligomeren bzw. Polymeren enthalten sind, die Verbindung A) also ein Oligomeres oder Polymeres darstellt, ist die Menge an Gruppen (I) im allgemeinen so groß, daß das C=C-Äquivalentgewicht zwischen 50 und 1800, vorzugsweise zwischen 200 und 1200 liegt.

Nach einer Ausführungsform der Erfindung kann der Rest $R^1R^2C=CR^3$-X (I), in der $R^1$, $R^2$ und $R^3$ jeweils die oben genannte Bedeutung haben, von einer ein- oder mehrfach ungesättigten, höchstens zweibasischen Carbonsäure, z.B. Mono- und/oder Dicarbonsäure, mit 2 bis 10, vorzugsweise 3 bis 6 C-Atomen, wie Zimtsäure, Crotonsäure, Citraconsäure oder deren Anhydrid, Mesaconsäure, Fumarsäure, Dehydrolävulinsäure, Sorbinsäure, vorzugsweise jedoch Acrylsäure, Methacrylsäure und/oder Maleinsäure oder deren Anhydrid abgeleitet sein, ferner auch von ungesättigten Ketonen, wie Divinylketon, Dibenzalaceton; ferner von ungesättigten Nitrilen, wie Maleinsäuremononitril-monoestern mehrwertiger Alkohole, von Cyanacrylsäureestern der Formel $H_2C=C(CN)$-COOR, von Nitriten der Formel ROOC-$R^3$C-CH-$NO_2$, von Alkylidenmalonsäureestern der Formel ROOC-C($COOR^4$)=$CR^1R^2$ ($R^4$ siehe vorstehend) Alkylidenacetessigestern der Formel ROOC-C(CO-$CH_3$)=$CR^1R^2$ bzw. den entsprechenden Nitrilen, wobei in vorstehenden Formeln R der Rest eines mehrwertigen Alkohols, $R^1$ und $R^2$ vorzugsweise Wasserstoff oder Alkyl mit 1 bis 4 C-Atomen ist. Diese Reste liegen im allgemeinen in Form eines Esters oder Amids gebunden vor. Sie können an den Rest eines mehrwertigen Alkohols, einer Verbindung mit NH-Gruppen wie eines Polyamins, Polyamids oder Polyiminoamids eines mehrwertigen Phenols, z.B. Bisphenol A, Resorcin, Hydrochinon, vorzugsweise eines Oligomeren und/oder Polymeren gebunden sein. So kann sich die Verbindung A) beispielsweise ableiten von gesättigten und/oder ungesättigten, OH-Gruppen enthaltenden Polyäthern oder Polyestern, z.B. solchen auf der Basis von Maleinsäure, Phthalsäure und Diolen; weiterhin kommen hierfür OH-Gruppen enthaltende Copolymerisate, die durch Copolymerisation von Hydroxyalkylverbindungen der Acryl- oder Methacrylsäure mit 1 bis 10 C-Atomen in der Alkylgruppe mit phenylaromatischen Verbindungen und gegebenenfalls weiteren copolymerisbaren Monomeren hergestellt wurden, in Frage. Die Harze weisen im allgemeinen OH-Zahlen von 40 bis 250, vorzugsweise 60 bis 200 auf. Hydroxyalkylverbindungen sind z.B. Hydroxyethyl-(meth)-acrylat, die entsprechenden verschiedenen Propyl-, Butyl-, Hexylverbindungen oder die durch Umsetzung von Epoxidverbindungen mit Acryl- oder Methacrylsäure erhaltenen 2-Hydroxyalkylester. Als phenyl-aromatische Verbindungen können $\alpha$-Methylstyrol, Vinylstyrol, Vinyltoluol, vorzugsweise aber Styrol eingesetzt werden. Weitere copolymerisierbare Monomere sind z.B. Alkylester mit 1 bis 10 C-Atomen in der

Alkylgruppe α,β-ethylenisch ungesättigter Mono- oder Dicarbonsäuren wie Acrylsäure, Methacrylsäure, Maleinsäure, Fumarsäure, Itaconsäure oder die Amide und Nitrile der genannten Säuren. Als Ausgangsverbindungen für die Verbindung A) kommen auch aliphatische oder aromatische, gegebenenfalls OH-Gruppen enthaltende Epoxidharze, z.B. epoxidgruppenhaltige Copolymerisate, die durch Copolymerisation von den vorstehend genannten Monomeren mit Glycidyl-(meth)-acrylat erhalten worden sind und im allgemeinen 1 bis 10, vorzugsweise 2 bis 7 % Epoxidsauerstoff besitzen, ferner Epoxidharze auf Basis von Diphenylolpropan und/oder -methan, Hydantoin und/oder auch Aminharze. Im Falle der Epoxidharze kann der esterartig gebundene Rest (I) z.B. durch Anlagerung von Acryl- oder Methacrylsäure an die Epoxidgruppe entstanden sein.

Mehrwertige Alkohole,die als Ausgangssubstanzen für die Komponente A) genannt sind, sind beispielsweise Alkandiole und -triole, wie Ethandiol, die verschiedenen Propan-, Butan-, Pentan-, Hexan-, Octandiole oder deren Homologe, die entsprechenden oligomeren Ether, ferner Glycerin, Trimethylolethan oder -propan, Hexantriol, Pentaerythrit, Dipentaerythrit, Sorbit, Polyvinylalkohol.

Als NH-Gruppen enthaltende Ausgangsverbindungen für die Verbindungen A) werden z.B. genannt Alkylendiamine und deren Oligomere, wie Ethylendiamin, Propylendiamin, Butylendiamin, Diethylentriamin, Tetramine und höhere Homologe dieser Amine, ferner Aminoalkohole, wie Diethanolamin. Als Amine kommen z.B. auch Aminocarbonsäureester mehrwertiger Alkohole in Frage. Verbindungen mit NH-Gruppen sind z.B. Acryl- oder Methacrylsäure-polyamide, ferner Polyurethane, z.B. Polyisocyanate, die in Form von Polyurethangruppen verkappt sind wie solche, die durch Umsetzung von Hydroxyäthylacrylat mit Polyisocyanaten erhalten werden, Aminharze wie Methylolmelamine, vorzugsweise Hexamethylolmelamin, Harnstoffharze, wobei der Rest (I) mit der Gruppierung -CO- an die Amingruppen dieser Verbindungen als Amid gebunden ist. Falls diese Aminverbindungen über OH-Gruppen bzw. Alkylolgruppen verfügen, ist es auch möglich, daß der Rest (I) unmittelbar über eine Estergruppe oder indirekt über eine Äthergruppe an diese Harze gebunden ist. Für die Ätherbindung des Restes (I) kann man also von einem Hydroxyalkylester oder einem Hydroxyalkylamid einer ungesättigten Säure, wie Acrylsäure, ausgehen. Dasselbe gilt für eine entsprechende Bindung an Polyhydroxyverbindungen.

In der Verbindung B) sind mindestens zwei Gruppen mit aktiven H-Atomen vom Typ

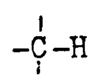

enthalten, die sich ganz oder teilweise von Methantricarbonsäuremonoamideinheiten der Formel (II) ableiten.

Geeignete Verbindungen B) sind beispielsweise Umsetzungsprodukte von Malonsäurediester wie Malonsäuredimethyl-, diethyl-, dibutyl-, dipentylester mit Mono- oder Polyisocyanaten.

Beispiele für derartige, erfindungsgemäß einsetzbaren Isocyanate sind aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat, Polyisocyanate wie Tetramethylendiisocyanat, Hexamethylendiisocyanat 2.2.4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat, IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-4''-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodimidgruppen, Allophonatgruppen, Isocyanuratgruppen, Urethangruppen, acylierte Harnstoffgruppen und Biuretgruppen aufweisende Polyisocyanate.

Besonders gut für das erfindungsgemäße Verfahren geeignet sind die bekannten Polyisocyanate, die hauptsächlich bei der Herstellung von Lacken eingesetzt werden, z.B. Biuret-, Isocyanurat- oder Urethangruppen-aufweisende Modifizierungsprodukte der obengenannten einfachen Polyisocyanate, insbesondere Tris-(6-Isocyanatohexyl)-biuret oder niedermolekulare, Urethangruppen-aufweisende Polyisocyanate, wie sie durch Umsetzung von im Überschuß eingesetztem IPDI mit einfachen mehrwertigen Alkoholen des Molekulargewichtsbereiches 62-300, Insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständigen Isocyanatgruppen aufweisende Präpolymere, wie sie insbesondere durch Umsetzung der obengenannten einfachen Polyisocyanate, vor allem Diisocyanate mit unterschüssigen Mengen an organischen Verbindungen mit mindestens zwei

gegenüber Isocyanatgruppen reaktionsfähigen Gruppen zugänglich sind. Als solche kommen insbesondere insgesamt mindestens zwei Aminogruppen und/oder Hydroxylgruppen aufweisende Verbindungen des Molekulargewichtsbereiches 300 bis 10 000, vorzugsweise 400 bis 6000 zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltige Acrylatharze verwendet.

In diesen bekannten Präpolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren a) eine mittlere NCO-Funktionalität von 2 bis 4, vorzugsweise von 2 bis 3 und b) ein mittleres Molekulargewicht von 500 - 10 000, vorzugsweise von 800 bis 4000 aufweisen.

Als Verbindung B) eignen sich aber auch Umsetzungsprodukte von Estern und Teilestern mehrwertiger Alkohole der Malonsäure mit Monoisocyanaten. Mehrwertige Alkohole sind z.B. zwei bis fünfwertige Alkohole wie Ethandiol, die verschiedenen Propan-, Butan-, Pentan- und Hexandiole, Polyethylen- und Polypropylendiole, Glycerin, Trimethylolethan und -propan, Pentaerythrit, Hexantriol und Sorbit.

Die Verbindung B) kann erfindungsgemäß auch in Mischung mit Malonestern von OH-Gruppen enthaltenden Acrylharzen, Polyestern, Polyethern, Polyesteramiden und -imiden und/oder Umsetzungsprodukten von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen eingesetzt werden.

Für den Fall, daß die Gruppen (II) in einem Oligomeren bzw. Polymeren enthalten sind, die Verbindung B) also ein Oligomeres oder Polymeres darstellt, ist die Menge an Gruppen (II) im allgemeinen so groß, daß das CH-Äquivalentgewicht zwischen 200 und 2000, vorzugsweise zwischen 400 und 1800 liegt.

Auch beschrieben ist ein Verfahren zur Herstellung von Härtungsprodukten auf Basis von A) Verbindungen mit mindestens zwei $R^1R^2C=CR^3$-X-Gruppen (I) und B) Verbindungen mit Methantricarbonsäureamideinheiten der Formel (II), wobei diese Verbindungen B) mindestens zwei Gruppen mit aktiven H-Atomen des Typs

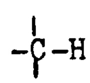

enthalten, bei dem die Umsetzung der Komponenten A) und B) unter Bildung eines oligomeren und/oder polymeren Reaktionsproduktes in Gegenwart eines Katalysators erfolgt.

Dieses Verfahren kann problemlos durchgeführt werden. Da vorzugsweise von oligomeren und/oder polymeren Verbindungen A) und B) ausgegangen wird, erhält man auch oligomere und/oder polymere vernetzte Reaktionsprodukte. Die Härtungsreaktion erfolgt im allgemeinen bei -10 bis 180 °C, vorzugsweise 0 bis 100, insbesondere 20 bis 80 °C. Zum Beispiel erhält man bei Raumtemperatur nach 2 bis 24 Stunden oder bei 60 °C nach 10 bis 40 Minuten Produkte mit guter Härte.

Als Katalysatoren für das Verfahren sind die für die Michael-Addition bekannten Katalysatoren, insbesondere Lewis-Basen und Brönstedt-Basen geeignet.

Als Lewis-Basen kommen beispielsweise Amide, Amidine, Guanidine, wie N,N,N,N-Tetramethylguanidin, weiterhin 1,8-Diazabicyclo-[5.4.0]-undec-7-en, 1,5-Diaza-bicyclo-[4.3.0]-non-5-en, 1,4-Diazabicyclo-[2.2.2]-octan (DABCO), sowie Phosphane (früher als Phosphine bezeichnet) und Halogenide, insbesondere Fluoride von quartären Ammoniumverbindungen, wie Alkyl-, Aryl- und/oder Benzylammoniumfluoride in Frage. Diese Halogenide können dabei gegebenenfalls in Kombination mit Kieselsäurealkylestern eingesetzt werden, um die Aktivität des Katalysators noch zu verbessern. Im einzelnen seien z.B. Alkylbenzyldimethylammoniumfluoride, Benzyltrimethylammonium-fluorid und Tetrabutylammoniumfluorid genannt.

Bei den Phosphanen kommen insbesondere tertiäre Phosphane der allgemeinen Formel $P(CH_2-Y)_3$ in Betracht, in der Y gleich oder verschieden ist und den Rest -OH, $-CH_2CN$ oder $-N(Z)_2$ bedeutet, wobei Z ein Alkylrest mit 1 bis 5 C-Atomen ist, wie Tris-2-cyanoethylphosphan, Trisdiethylaminomethylphosphan, vorzugsweise Trishydroxymethylphosphan und Trisdimethylaminomethylphosphan. Weiterhin sind auch tertiäre Phosphane der allgemeinen Formel $P(R^4,R^5,R^6)$ geeignet, in der die Reste $R^4$, $R^5$ und $R^6$ einen Alkylrest mit 1 bis 12 C-Atomen oder einen Phenylrest, unsubstituiert oder substituiert mit mindestens einer Alkyl-, Alkoxy- oder Dialkylaminogruppe mit jeweils 1 bis 4 C-Atomen bedeuten, $R^4$, $R^5$ und $R^6$ gleich oder verschieden sind, wobei jedoch mindestens einer der Reste einen Phenylrest darstellt. Beispiele hierfür sind Triphenylphosphan, Tris-p-tolylphosphan, Tris-o-anisylphosphan, Tris-p-dimethylaminophenylphosphan,

Phenyl-di-p-anisylphosphan, Phenyl-di-o-anisylphosphan, Diphenyl-p-anisylphosphan, Diphenyl-o-anisylphosphan, Diphenyl-p-dimethylaminophenylphosphan, Methyl-diphenylphosphan, Methyl-di-tolylphosphan, Ethyl-di-p-anisylphosphan, (Diethylaminomethyl)-di-phenylphosphan, vorzugsweise Tris-p-anisylphosphan, Methyl-diphenylphosphan und Methyl-di-p-anisylphosphan.

Unter Phosphanen seien hier weiterhin auch die Iminophosphorane der allgemeinen Formel ($R^7$, $R^8$, $R^9$) P=N-C ($R^{10}$, $R^{11}$, $R^{12}$) verstanden, in der $R^7$, $R^8$, $R^9$ gleich oder verschieden sind und einen Alkylrest mit 1 bis 12 C-Atomen oder eine Alkyl-, Alkoxy- oder Dialkylaminogruppe mit jeweils 1 bis 4 C-Atomen im Alkylrest bedeuten und $R^{10}$, $R^{11}$, $R^{12}$ gleich oder verschieden sind und einen Alkylrest mit 1 - 5 C-Atomen oder einen Phenylrest darstellen. Beispiele hierfür sind α,α-Dimethylbenzylimino-tris-(dimethylamino-)-phosphoran, α,α-Dimethylbenzyliminomethyldiphenyl-phosphoran, t-Butylimino-tri-phenyl-phosphoran und vorzugsweise α,α-Dimethylbenzylimino-tri-butyl-phosphoran.

Als Brönstedt-Basen, die für das Verfahren als Katalysatoren eingesetzt werden können, seien hier beispielsweise Alkoholate, insbesondere Alkalialkoholate wie Lithiumbutylat, Natrium-, Kaliummethylat sowie quartäre Ammoniumverbindungen, wie Alkyl-, Aryl- und/oder Benzylammoniumhydroxide und -carbonate erwähnt. Spezielle Vertreter für quartäre Ammoniumverbindungen sind hierbei Alkylbenzyldimethylammoniumhydroxyd (Alkyl = $C_{16}$-$C_{22}$), Benzyltrimethylammoniumhydroxyd und Tetrabutylammoniumhydroxyd. Die genannten Katalysatoren oder Katalysatorengemische können in Gegenwart von an sich bei Raumtemperatur nicht wirksamen tertiären aliphatischen Aminen, wie beispielsweise Triethylamin, N-Methyldiethanolamin, N-Metyl-diisopropanolamin oder N-Butyldiethanolamin verwendet werden. Diese Hilfsstoffe können zu 0,1 - 5, vorzugsweise 0,1 - 1 Gew.-%, anwesend sein.

Die Menge des Katalysators beträgt im allgemeinen 0,01 bis 5, vorzugsweise 0,02 bis 2 Gew.-%, bezogen auf den Gesamtfeststoffgehalt des Ausgangsproduktes. Sie kann je nach der Reaktivität der Verbindungen A) und B) und der beabsichtigten Verfahrensführung variiert werden.

Das Verfahren läßt sich in einer Stufe durchführen, indem man beispielsweise mit äquivalenten Anteilen der Komponenten arbeitet. Die Topfzeit und Eigenschaften des Produktes hängen daher von den Verfahrensbedingungen, d.h. von der Art und der Menge der Ausgangsstoffe, der Dosierung des Katalysators und der Temperaturführung ab. So läßt sich die Elastizität des vernetzten Produktes innerhalb eines Toleranzbereiches z.B. durch die Kettenlänge der für A) oder B) eingesetzten Oligomeren und/oder Polymeren steuern.

Obwohl das Verfahren in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

Das Verfahren kann in Gegenwart oder Abwesenheit von organischen Lösungsmitteln durchgeführt werden, die gegebenenfalls auch einen Einfluß auf die Aktivität der Katalysatoren ausüben. Geeignete Lösungsmittel sind z.B. aromatische und aliphatische Kohlenwasserstoffe wie Toluol, die verschiedenen Xylole, Gemische aliphatischer und/oder aromatischer Kohlenwasserstoffe, höhersiedende Mineralölfraktionen, Ester, Äther, Alkohole.

Alle Reaktionskomponenten können einzeln oder im Gemisch, sofern sie miteinander verträglich sind, eingesetzt werden.

Obwohl das Verfahren gewöhnlich unter Normaldruck abläuft, kann es in einzelnen Fällen erwünscht sein, auch unter erhöhtem Druck zu arbeiten, um die Härtungsgeschwindigkeit zu erhöhen.

Das gegenseitige Mengenverhältnis der Reaktionskomponenten A) und B), hängt von der Anzahl der ungesättigten Gruppen (I) der Verbindung A) und der Summe der aktiven H-Atome in Verbindung B) (im folgenden kurz mit "aktive Doppelbindungen : aktive H-Atome" bezeichnet) ab. Zur Herstellung des vernetzen Endproduktes beträgt das genannte Verhältnis aktive Doppelbindungen : aktive H-Atome 2:1 bis 1:2, insbesondere (0,8 bis 1,2):1 bis 1:(0,8 bis 1,2).

Das Umsetzungsgemisch ist ein Zwei-Komponenten-System, das Topfzeiten zeigt, die je nach Auswahl der Verbindung A) und B) sowie nach Art und Menge des Katalysators bzw. der Katalysatorkombination zwischen 5 min. und etwa 12 Stunden schwanken. Dadurch ist eine hohe Verarbeitungssicherheit gewährleistet. Aufgrund dieser vorteilhaften Eigenschaft des Produktes im Zusammenhang mit seiner raschen und einwandfreien Hartung bei Raumtemperatur oder erhöhter Temperatur und seiner chemischen Beständigkeit ist es hervorragend als Bindemittel für Überzüge geeignet.

Die Zwei-Komponenten-Systeme eignen sich zur Herstellung von Formkörpern oder lassen sich als Überzüge auf vielerlei Substrate aufbringen, z.B. auf solche organischer oder anorganischer Natur, wie Holz, Holzfaserstoffe, z.B. als Holzversiegelung, Textilien natürlicher oder synthetischer Herkunft, Kunststoffe, Glas, Keramik, Baustoffe, wie Beton, Faserplatten, Kunststeine, insbesondere jedoch auf Metall. Die Überzüge können auch für Gegenstände und Geräte im Haushalt und Gewerbe eingesetzt werden, z.B. Kühlgeräte, Waschmaschinen, Elektrogeräte, Fenster, Türen, Möbel. Das Aufbringen kann durch Streichen, Sprühen, Tauchen erfolgen oder elektrostatisch durchgeführt werden.

Überzügen, vorzugsweise Kraftfahrzeuglacken und insbesondere Autoreparaturlacken können auch hergestellt werden. Hierbei ist die Xylolbeständigkeit und damit gleichzeitig eine gute Beständigkeit gegenüber Superbenzin vor allem von Interesse. Da das 2-Komponenten-System in verhältnismäßig kurzer Zeit bei Raumtemperatur selbst härten kann, ohne daß umweltbelastende Substanzen frei werden, ist eine Verwendung als Autoreparaturlack von erheblicher praktischer Bedeutung.

Selbstverständlich können die Zwei-Komponenten-Systeme noch die üblichen Zusatzstoffe enthalten wie Farbstoffe, Pigmente, Füllstoffe, Weichmacher, Stabilisatoren, Verlaufmittel, neutralisierende Stoffe wie tertiäre Amine und Katalysatoren, die in den üblichen Mengen verwendet werden können. Diese Substanzen können den Einzelkomponenten und/oder der Gesamtmischung zugesetzt werden.

Als Farbstoffe bzw. Pigmente, die anorganischer oder organischer Natur sein können, werden beispielsweise genannt: Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Cadmiumsulfid, Chromoxyd, Zinksulfid, Nickeltitangelb, Chromtitangelb, Eisenoxydrot, Eisenoxydscharz, Ultramarinblau, Phthalocyaninkomplexe, Naptholrot.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate.

Für die Füller werden die üblichen Lösungsmittel verwendet beispielsweise aliphatische und aromatische Kohlenwasserstoffe, Äther, Ester, Glykoläther sowie deren Ester, Ketone, Chlorkohlenwasserstoffe, Terpenderivate, Toluol, Xylol, Äthyl- und Butylacetat, Äthylenglykolmonoäthyl- oder -butylätheracetat, Äthylenglykoldimethyläther, Diäthylenglykoldimethyläther, Cyclohexanon, Methyläthylketon, Aceton, Isophoron oder Mischungen davon.

In den nachstehenden Vorschriften und Beispielen bedeuten % jeweils Gew.-% und T jeweils Gew.-Teile. Unter vermindertem Druck wird jeweils der Druck der Wasserstrahlpumpe verstanden.

## Beispiele

### I) Herstellung der Komponente A (Michael-Acceptor)

A 1) 1000 T eines glycidylgruppenhaltigen Acrylatharzes, hergestellt aus Styrol, Glycidylmethacrylat und Dimethylmaleinat (Epoxidäquivalentgewicht 510) wurden in 680 T Xylol bei 70 °C gelöst und anschließend 127 T Acrylsäure und 1 T Tetraethylammoniumbromid zugesetzt. Unter Durchleiten von Luft wurde bei 80 °C bis zu einer Säurezahl 1 nachgerührt. Die hellgelbe Lösung hatte einen Festkörpergehalt von 62,5 %; C = C-Äquivalentgewicht 1022.

A 2) 570 T der Harzlösung aus Beispiel A 1) wurden mit 0,1 T Dibutylzinndilaurat und 50 T n-Butylisocyanat versetzt. Es wurde bei 60 °C 4 Stunden nachgerührt (NCO-Wert 0,2 %). Festkörpergehalt 65 %; C = C-Äquivalentgewicht 1112.

A 3) In einem Dreihalskolben, versehen mit Rührer, Thermometer sowie Destillier-Kolonne mit absteigendem Kühler, wurden 657 T eines Melaminharzes vom Typ Hexamethoxymethylmelamin (Molekulargewicht 399), 1053 T 2-Hydroxyethylacrylat, 3,3 T Hydrochinonmonomethyläther und 1,65 T Schwefelsäure vorgelegt. Unter vermindertem Druck wurde auf 75 °C erwärmt und innerhalb von 4 Stunden auf 95 °C erhitzt. Nach Abkühlung auf Zimmertemperatur wurde mit 10 T einer 10 %igen methanolischen Kalilauge neutralisiert und filtriert. Man erhielt 1410 T eines niedrigviskosen klaren Harzes C = C-Äquivalentgewicht 175.

A 4) 500 T Isophorondiisocyanat wurden in 190 T Xylol gelöst, auf 40 °C erhitzt und nach Zugabe von 0,8 T Zinkacetylacetonates und 3,8 T Hydrochinonmonomethylethers innerhalb von 2 Stunden mit 261 T 2-Hydroxyethylacrylat versetzt. Nach Erreichen des theoretischen Isocyanatgehaltes wurde auf 60 °C erhitzt und portionsweise mit 101 T Trimethylolpropan versetzt und bis zu einem N = C = O-Gehalt 0,3 % nachgerührt. Anschließend wurde mit Xylol auf einen Feststoffgehalt von 60 % verdünnt. Ausbeute 1045 T. C = C-Äquivalentgewicht: 640.

### II) Herstellung der Komponente B) (Michael-Donator)

B 1) Zu einer Mischung aus 132 T Malonsäuredimethylester, 59 T Xylol und 0,5 T Natriummethylat wurden bei Raumtemperatur innerhalb von 90 Minuten 103 T 2.2.4-Trimethylhexamethylendiisocyanat 1,6 dosiert. Nach Beendigung der Zugabe wurden bei 60 °C bis zu einem Gehalt an freien N = C = O-Gruppen von 0,5 % nachgerührt und nach Filtration 285 T einer klaren hellgelben Harzlösung erhalten. Feststoffgehalt 80 %. C-H-Äquivalentgewicht: 290.

B 2) Zu einer Mischung aus 160 T Malonsäurediethylester und 0,7 T Natriummethylat wurden bei Raumtemperatur 190 T eines durch Timerisierung von Hexamethylendiisocyanat erhaltenen Isocyanurat-Polyisocyanates (N = C = O-Gehalt 21 %) tropfenweise zugefügt. Nach Beendigung des Zutropfens wurde bei 60 ° C bis zu einem Gehalt an freien N = C = O-Gruppen von 0,5 % nachgerührt. Das Harz wurde in 88 T Diglykoldimethylether aufgelöst und filtriert. Ausbeute 420 T, Festkörpergehalt 80 %, C-H-Äquivalentgewicht: 420.

B 3) 216 T Malonsäuredibutylester und 1 T Natriummethylat wurden bei 60 ° C mit 190 T eines durch Trimerisierung von Hexamethylendiisocyanat erhaltenen Isocyanurat-polyisocyanates (N = C = O-Gehalt: 21 %) versetzt. Nach Erreichen eines Gehaltes an freien N = C = O-Gruppen von 0,5 % wurden 174 T Xylol zugefügt und filtriert. Ausbeute 570 T, Festkörpergehalt 70 %. C-H-Äquivalentgewicht: 555,

B 4) 40.2 T Trimethylolpropan und 288 T Malonsäurediethylester wurden in einer mit Rührer, Thermometer und absteigendem Kühler bestückten Apparatur unter Stickstoff als Schutzgas auf 170 ° C erhitzt. Innerhalb 5 Stunden wurden bei 160 - 170 ° C 31 T Äthanol abdestilliert und nach Abkühlung auf 120 ° C niedrigsiedende Anteile des Reaktionsgemisches unter einem verminderten Druck von 4 hPa entfernt. Die Temperatur der Reaktionsmischung wurde weiter auf 80 ° C gesenkt, 1,5 T Natriummethylat und innerhalb einer Stunde 100 T Cyclohexylisocyanat hinzugefügt und der Ansatz bei dieser Temperatur bis zu einem Isocyanatgehalt von 0,4 % nachgerührt, wobei 300 T einer hellgelben viskosen Flüssigkeit erhalten wurden. C-H-Äquivalentgewicht: 240.

B 5) In einer gleichen Apparatur wie in B 4 wurden 335 T Trimethylolpropan und 2400 T Malonsäurediäthylester auf 150 bis 170 ° C erhitzt. Nach beendeter Abdestillation des Äthanols wurde der überschüssige Malonsäurediäthylester unter vermindertem Druck bei 150 bis 160 ° C abdestilliert.

Es verblieben als Rückstand 1201 T einer farblosen Flüssigkeit. C-H-Äquivalentgewicht 79.

IV) Herstellung der Beschichtungen - Beispiele 1 bis 14

Die in nachstehend er Tabelle 1 angegebenen Gewichtsmengen der Komponenten A) und B) wurden in äquimolaren Mengen gemischt. Als Vergleichssubstanz diente ein aus 31 T Glycidylmethacrylat, 15 T Dimethylmaleinat und 54 T Styrol hergestelles Copolymerisat, wobei als Härter für dieses System Diäthylentriamin eingesetzt wurde. Das erhaltene Beschichtungsmaterial wurde nach Zumischung des angegebenen Katalysators mittels eines Aufziehrakels in einer Naßfilmstärke von 100 μm auf Glasplatten aufgebracht und bei Raumtemperatur bzw. bei 80 ° C (30 min) gehärtet.

Die in den nachstehenden Tabellen benutzten Abkürzungen bedeuten:

HH : Heißhärtung = 30 min bei 80 ° C
RT : Raumtemperatur
TMPTA : Trimethylolpropantrisacrylat
MDPP : Methyl-diphenylphosphan
MDTP : Methyl-di-p-tolylphosphan
MDPAP : Methyl-di-p-anisylphosphan
DBU : 1,8-Diazabicyclo-[5,4,0]-undec-7-en
DBN : 1,5-Diazabicyclo-[4,3,0]-non-5-en
TMG : N,N,N',N'-Tetramethylguanidin
DABCO : 1,4-Diazabicyclo-[2,2,2]-octan
i.o. : keine Verletzung des Lackfilmes erkennbar
DETA : Diäthylentriamin

Tabelle

Klarlackfilm (100 µ Naßfilm)

| Beispiel | Komponente A Typ | Komponente A Menge | Komponente B Typ | Komponente B Menge | Katalysator Typ | Katalysator Menge | Topfzeit (h) | Härtungs-temperatur | Pendelhärte nach König (s) nach 1 Tg. | Pendelhärte nach König (s) 10 Tg. | Beständigkeit gegen (nach 10 Tagen) Superbenzin | Beständigkeit gegen (nach 10 Tagen) Xylol |
|---|---|---|---|---|---|---|---|---|---|---|---|---|
| 1 | TMPTA | 10 | B2 | 42 | MDPP | 0,22 | 8 | RT | 100 | 171 | i.o. | > 1 h |
| 2 | TMPTA | 5 | B3 | 28 | DBU | 0,12 | 4 | RT | 92 | 159 | i.o. | > 1 h |
| 3 | TMPTA | 5 | B3 | 28 | DBN | 0,05 | 6 | HH | 128 | 164 | i.o. | > 1 h |
| 4 | A1 | 31 | B1 | 9 | TMG | 0,13 | 7 | HH | 123 | 175 | i.o. | > 1 h |
| 5 | A1 | 31 | B1 | 9 | MDTP | 0,13 | 9 | RT | 78 | 170 | i.o. | > 1 h |
| 6 | A1 | 31 | B2 | 13 | MDPAP | 0,13 | 12 | HH | 115 | 181 | i.o. | > 1 h |
| 7 | A2 | 34 | B2 | 13 | MDPP | 0,16 | 14 | HH | 104 | 201 | i.o. | > 1 h |
| 8 | A2 | 34 | B3 | 16 | DABCO | 0,07 | 12 | RT | 84 | 190 | i.o. | > 1 h |
| 9 | A3 | 18 | B1 | 30 | TMG | 0,21 | 8 | RT | 101 | 195 | i.o. | > 1 h |
| 10 | A3 | 9 | B3 | 28 | DBU | 0,06 | 9 | RT | 98 | 182 | i.o. | > 1 h |
| 11 | A4 | 32 | B1 | 15 | DBN | 0,06 | 10 | RT | 94 | 174 | i.o. | > 1 h |
| 12 | A4 | 32 | B2 | 21 | MDTP | 0,18 | 11 | HH | 126 | 192 | i.o. | > 1 h |
| 13 | A1 | 31 | B4 | 7 | DBU | 0,13 | 8 | RT | 102 | 174 | i.o. | > 1 h |
| 14 | A1 | 62 | B2 | 13 | MDTP | 0,28 | 11 | HH | 126 | 184 | i.o. | > 1 h |
| | | | B4 | 7 | | | | | | | | |
| 15 | A1 | 62 | B4 | 7 | TMG | 0,24 | 12 | RT | 104 | 174 | i.o. | > 1 h |
| | | | B5 | 2,5 | | | | | | | | |
| A* | - | 45,8 | DETA | 2,1 | - | - | 24 | RT | 65 | 117 | | 10 min |
| B* | - | 45,8 | DETA | 2,1 | - | - | 24 | HH | 132 | 142 | | 50 min |

* Vergleichsbeispiele

## Patentansprüche

**1.** Härtbare Mischung enthaltend

A) Verbindungen mit mindestens zwei $R^1R^2C=CR^3$-X-Gruppen (I) und

B) Verbindungen mit Methan-tricarbonsäureamid-Einheiten der Formel

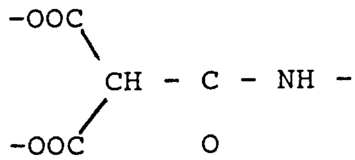

(II)

wobei diese Verbindungen B) mindestens zwei Gruppen mit aktiven H-Atomen des Typs

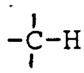

enthalten, und wobei in der Formel (I)

X -CO- bedeutet,

$R^1$ Wasserstoff oder ein Kohlenwasserstoff-Rest mit 1 bis 10 C-Atomen ist,

$R^2$ Wasserstoff, einen Kohlenwasserstoff-Rest mit 1 bis 10 C-Atomen, eine Estergruppe mit dem Rest $R^4$ eines einwertigen Alkohols mit bis zu 12 C-Atomen, -CN, $-NO_2$, eine $CO-NHR^1$- oder eine $CO-R^1$-Gruppe darstellt, und

$R^3$ dieselbe Bedeutung wie $R^2$ hat und hiermit gleich oder verschieden ist, wobei das Mengenverhältnis von A) zu B) so gewählt wird, daß das Verhältnis der aktiven Doppelbindungen zu den aktiven H-Atomen 2 : 1 bis 1 : 2 beträgt,

sowie 0,01 bis 5 Gew.-%, bezogen auf den Gesamtfeststoffgehalt, eines für die Michael-Reaktion bekannten Katalysators, wobei diese härtbare Mischung frei von Photoinitiatoren ist.

**2.** Härtbare Mischung nach Anspruch 1, dadurch gekennzeichnet, daß sie als Katalysatoren Lewis-Basen oder Brönstedt-Basen enthält.

**3.** Härtbare Mischung nach Anspruch 1 und/oder 2, dadurch gekennzeichnet, daß sie als Katalysatoren mindestens eine Verbindung aus der Gruppe der Amide, Guanidine, Amidine, Phosphane, quartären Ammoniumfluoride oder -hydroxide sowie Alkalialkoholate enthält.

**4.** Härtbare Mischung nach mindestens einem der Ansprüche 1 bis 3, dadurch gekennzeichnet, daß sie als Katalysatoren N,N,N,N-Tetramethylguanidin, 1,5-Diazabicyclo[4,3,0]-non-5-en, 1,8-Diazabicyclo-[5,4,0]-undec-7-en oder 1,4-Diazabicyclo[2,2,2]-octan enthält.

**5.** Härtbare Mischung nach mindestens einem der Ansprüche 1 bis 3, dadurch gekennzeichnet, daß sie als Katalysatoren Trishydroxymethylphosphan, Trisdimethylaminomethylphosphan, Trisphenylphosphan, Methyl-di-p-tolylphosphan, Tris-p-anisylphosphan, Methyldiphenylphosphan, Methyl-d-p-anisylphosphan oder $\alpha$, $\alpha$-Dimethylbenzyliminotributylphosphoran enthält.

**6.** Härtbare Mischung nach mindestens einem der Ansprüche 1 bis 5, dadurch gekennzeichnet, daß sie 0,02 bis 2 Gew.-% Katalysator, bezogen auf den Gesamtfeststoffgehalt des Ausgangsproduktes, enthält.

**7.** Härtbare Mischung nach mindestens einem der Ansprüche 1 bis 6, dadurch gekennzeichnet, daß sie die Verbindungen A) und B) in solchen Mengen enthält, daß das Verhältnis von aktiven Doppelbindungen zu aktiven H-Atomen im Bereich von (0,8 bis 1,2) : 1 bis 1 : (0,8 bis 1,2) liegt.

**8.** Härtbare Mischung nach mindestens einem der Ansprüche 1 bis 7, dadurch gekennzeichnet, daß sie eine Verbindung A) enthält, worin $R^1$ sowie gegebenenfalls $R^2$ und $R^3$ in der Formel (I) einen Kohlenwasserstoffrest mit 1 bis 4 C-Atomen bedeuten.

**9.** Härtbare Mischung nach mindestens einem der Ansprüche 1 bis 8, dadurch gekennzeichnet, daß sie eine Verbindung A) enthält, worin der Rest $R^1R^2C=CR^3-X$ (I) von einer ein- oder mehrfach ungesättigten, höchstens zweibasischen Carbonsäure mit 2 bis 10 C-Atomen abgeleitet ist.

**10.** Härtbare Mischung nach Anspruch 9, dadurch gekennzeichnet, daß es sich bei der Carbonsäure um Acrylsäure, Methacrylsäure und/oder Maleinsäure handelt.

**11.** Härtbare Mischung nach mindestens einem der Ansprüche 1 bis 9, dadurch gekennzeichnet, daß sie eine Verbindung A) enthält, worin die Gruppen (I) an den Rest eines Polyols oder Polyamins gebunden sind.

**12.** Härtbare Mischung nach mindestens einem der Ansprüche 1 bis 11, dadurch gekennzeichnet, daß sie eine Verbindung A) enthält, die von einem OH-Gruppen enthaltenden Polyester, OH-Gruppen enthaltenden Copolymerisat, epoxidgruppenhaltigen Copolymerisat, Epoxidharz und/oder Aminharz abgeleitet ist.

**13.** Härtbare Mischung nach Anspruch 12, dadurch gekennzeichnet, daß das OH-Gruppen enthaltende Copolymerisat OH-Zahlen von 40-250 aufweist.

**14.** Härtbare Mischung nach Anspruch 12, dadurch gekennzeichnet, daß das epoxidgruppenhaltige Copolymerisat 1 bis 10 % Epoxidsauerstoff enthält.

**Claims**

**1.** A curable composition comprising
A) compounds having at least two $R^1R^2C=CR^3$-X groups (1) and
B) compounds having methanetricarboxamide units of the formula

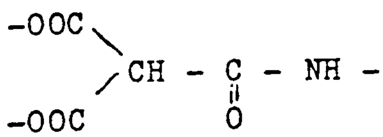

(II)

these compounds B) containing at least two groups having active H atoms of the type

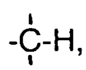

and in the formula (I),

X denoting -CO-,

$R^1$ being hydrogen or a hydrocarbon radical having 1 to 10 carbon atoms,

$R^2$ representing hydrogen, a hydrocarbon radical having 1 to 10 carbon atoms, an ester group having the radical $R^4$ of a monohydric alcohol having up to 12 carbon atoms, -CN, $-NO_2$ or a CO-$NHR^1$- or CO-$R^1$-group, and

$R^3$ having the same meaning as $R^2$ and being identical to or different from the latter, the quantitative ratio of A to B being selected such that the ratio of active double bonds to active hydrogen atoms is within the range of 2:1 to 1:2,

and further comprising 0.01 to 5 % by weight, based on total solids, of a catalyst customarily employed for a Michael reaction, said curable composition being free from photoinitiators.

**2.** The curable composition as claimed in claim 2, wherein Lewis bases or Bronstedt bases are contained as the catalysts.

**3.** The curable composition as claimed in claim 1 and or 2, wherein at least one compound belonging to the group comprising amides, guanidines, amidines, phosphanes, quaternary ammonium fluorides or ammonium hydroxides and alkali metal alcoholates is contained as catalyst.

**4.** The curable composition as claimed in at least one of claims 1 to 3, wherein N,N,N,N-tetramethylguanidine, 1,5-diazabicyclo[4.3.0]non-5-ene, 1,8-diazabicyclo[5.4.0.]undec-7-ene or 1,4-diazabicyclo-[2.2.2]octane are contained as catalysts.

**5.** The curable composition as claimed in at least one of claims 1 to 3, wherein trihydroxymethylphosphane, trisdimethylaminomethylphosphane, triphenylphosphane, methyldi-p-tolylphosphane, tris-p-anisylphosphane, methyldiphenylphosphane, methyldi-p-anisylphosphane or α,α-dimethylbenzyliminotributylphosphorane are contained as catalysts.

**6.** The curable composition as claimed in at least one of claims 1 to 5, wherein the amount of catalyst is 0.02 to 2 % by weight, relative to the total solids content of the starting material.

**7.** The curable composition as claimed in at least one of claims 1 to 6, wherein the compounds A) and B) are contained in quantities such that the ratio of active double bonds to active H atoms is within the range from (0.8 to 1.2): 1 to 1:(0.8 to 1.2).

**8.** The curable composition as claimed in at least one of claims 1 to 7, wherein a compound A) is contained in which $R^1$, and, if appropriate $R^2$ and $R^3$, in the formula (I) denote a hydrocarbon radical having 1 to 4 carbon atoms

**9.** The curable composition as claimed in at least one of claims 1 to 8, wherein a compound A) is contained in which the radical $R^1R^2C=CR^3$-X (I) is derived from a monounsaturated or polyunsaturated carboxylic acid which is not more than dibasic and has 2 to 10 carbon atoms.

**10.** The curable composition as claimed in claim 9, wherein the carboxylic acid is acrylic acid, methacrylic acid and/or maleic acid.

**11.** The curable composition as claimed in at least one of claims 1 to 9, wherein the groups (I) in the compounds A) are attached to the radical of a polyol or polyamine.

**12.** The curable composition as claimed in at least one of claims 1 to 11, wherein a compound A) derived from a polyester containing OH groups, a copolymer containing OH groups, a copolymer containing epoxide groups or an epoxide resin and/or amine resin is contained.

**13.** The curable composition as claimed in claim 12, wherein the copolymer containing OH groups has an OH number of 40-250.

**14.** The curable composition as claimed in claim 12, wherein the copolymer containing epoxide groups contains 1 to 10 % of epoxide oxygen.

**Revendications**

**1.** Mélange durcissable contenant
A) des composés ayant au moins deux groupes $R^1R^2C=CR^3$-X (I) et
B) des composés comportant des motifs méthanetricarboxamide de formule

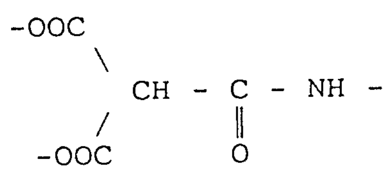

(II)

ces composés B) contenant au moins deux groupes comportant des atomes d'hydrogène actifs du type

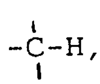

et où, dans la formule (I)
X est -CO-,
$R^1$ est un hydrogène ou un résidu hydrocarboné ayant de 1 à 10 et de préférence de 1 à 4 atomes de carbone,

$R^2$ est un hydrogène, un résidu hydrocarboné ayant de 1 à 10 atomes de carbone, un groupe ester avec le résidu $R^4$ d'un monoalcool ayant jusqu'à 12 atomes de carbone, -CN, $-NO_2$, un groupe CO-NHR$^1$ ou un groupe CO-R$^1$, et

$R^3$ a les mêmes significations que $R^2$ et peut être identique à $R^2$ ou lui être différent, le rapport pondéral de A) à B) étant choisi de façon que le rapport des doubles liaisons actives aux atomes d'hydrogène actifs soit de 2:1 à 1:2,

ainsi que 0,01 à 5 % en poids, par rapport à la teneur totale en extrait sec, d'un catalyseur connu pour la réaction de Michael, ces mélanges durcissables étant exempts de photoamorceurs.

**2.** Mélange durcissable selon la revendication 1, caractérisé en ce qu'il contient comme catalyseurs des bases de Lewis ou des bases de Brönstedt.

**3.** Mélange durcissable selon la revendication 1 et/ou la revendication 2, caractérisé en ce qu'il contient comme catalyseur au moins un composé choisi parmi l'ensemble comprenant les amides, les guanidines, les amidines, les phosphanes, les fluorures ou hydroxydes d'ammonium quaternaire, ainsi que les alcoolates de métaux alcalins.

**4.** Mélange durcissable selon au moins l'une des revendications 1 à 3, caractérisé en ce qu'il contient comme catalyseurs de la N,N,N,N-tétraméthylguanidine, du diaza-1,5 bicyclo[4.3.0]nonène-5, du diaza-1,8 bicyclo[5.4.0]undécène-7 ou du diaza-1,4 bicyclo[2.2.2]octane.

**5.** Mélange durcissable selon au moins l'une des revendications 1 à 3, caractérisé en ce qu'il contient comme catalyseurs du trishydroxyméthylphosphane, du trisdiméthylaminométhylphosphane, du trisphénylphosphane, du méthyldiparatolylphosphane, du trisparaanisylphosphane, du méthyldiphénylphosphane, du méthyldiparaanisylphosphane, ou de l'$\alpha$,$\alpha$-diméthylbenzyliminotributylphosphane.

**6.** Mélange durcissable selon au moins l'une des revendications 1 à 5, caractérisé en ce qu'il contient de 0,02 à 2 % en poids de catalyseur par rapport à la teneur totale en extrait sec du produit de départ.

**7.** Mélange durcissable selon au moins l'une des revendications 1 à 6, caractérisé en ce qu'il contient les composés A) et B) en des quantités telles que le rapport des doubles liaisons aux atomes d'hydrogène actif soit compris dans l'intervalle de (0,8 à 1,2):1 à 1:(0,8 à 1,2).

**8.** Mélange durcissable selon au moins l'une des revendications 1 à 7, caractérisé en ce qu'il contient un composé A) dans lequel $R^1$ et éventuellement $R^2$ et $R^3$, dans la formule (I), représentent chacun un résidu hydrocarboné ayant de 1 à 4 atomes de carbone.

**9.** Mélange durcissable selon au moins l'une des revendications 1 à 8, caractérisé en ce qu'il contient un composé A) dans lequel le radical $R^1R^2C=CR^3$-X (I) dérive d'un acide au plus dicarboxylique ayant de 2 à 10 atomes de carbone, une ou plusieurs fois insaturé.

**10.** Mélange durcissable selon la revendication 9, caractérisé en ce que l'acide carboxylique est l'acide acrylique, l'acide méthacrylique et/ou l'acide maléique.

**11.** Mélange durcissable selon au moins l'une des revendications 1 à 9, caractérisé en ce qu'il contient un composé A) dans lequel les groupes (I) sont fixés au résidu d'un polyol ou d'une polyamine.

**12.** Mélange durcissable selon au moins l'une des revendications 1 à 11, caractérisé en ce qu'il contient un composé A) qui dérive d'un polyester hydroxylé, d'un copolymère hydroxylé, d'un copolymère époxydé, d'une résine époxyde et/ou d'une résine d'amine.

**13.** Mélange durcissable selon la revendication 12, caractérisé en ce que le copolymère hydroxylé a un indice d'hydroxyle de 40 à 250.

**14.** Mélange durcissable selon la revendication 12, caractérisé en ce que le copolymère époxydé contient de 1 à 10 % d'oxygène d'époxyde.